# EUROPEAN PATENT SPECIFICATION

(11) **EP 1 795 400 B1**
(45) Date of publication and mention of the grant of the patent: **23.07.2008**
(21) Application number: 06125522.0
(22) Date of filing: 06.12.2006
(51) Int. Cl.: B60R 15/00, B61D 35/00, B63B 29/14, E03D 5/00

(54) **Marine toilet**
Toilette auf Schiff
Toilette pour bateau

(30) Priority: 09.12.2005 GB 0525133
(43) Date of publication of application: 13.06.2007
(73) Proprietor: ITT Manufacturing Enterprises, Inc., Wilmington, Delaware 19801 (US)
(72) Inventor: Edgerley, David, London, Greater London NW3 2NH (GB)
(74) Representative: Ertl, Nicholas Justin

(56) References cited:
- US-A1- 3 566 417
- US-A1- 3 846 847

## Description

This invention relates to marine toilets.

Various designs of marine toilet exist. The most basic design is a manual toilet, in which the flushing action is operated by a manual pump, which is designed to use a single cylinder to draw water in for flushing and to pump out the waste. These are easy to service.

One type of marine toilets is disclosed in US 3,846, 847-A.

Electric toilets operate in essentially the same way, but with electric control of the pumping action. The electric motor is typically mounted at the back of the base of the toilet, and have push button control. The control can give various options, such as selection of water level. In order to improve the visual appearance of the toilet, the electric motor can be housed within the outer toilet enclosure, so that the toilet has substantially the same appearance as a domestic toilet.

One issue common to all designs is the problem of available space.

According to the invention, there is provided a marine toilet as defined in claim 1.

This design of marine toilet enables the outer enclosure to be installed in the optimum way having regard to the shape of the outer enclosure, the position of the flush control device, and the shape of the space in which the toilet is fitted. The direction faced by the toilet seat can be selected independently.

The outer enclosure can be load bearing for supporting the weight of a user of the toilet, and the toilet bowl is not load bearing. This enables the toilet bowl to be designed with aesthetic rather than load bearing properties. For example, the outer enclosure may be ceramic and the toilet bowl may be ceramic or stainless steel.

The pump may be electric although a manual pump may also be used.

The toilet can be assembled as a three piece structure. Thus, the toilet bowl can be removably slidably received in the opening in the top of the outer enclosure, and the seat can be removably engaged with the rim of the opening in the top of the outer enclosure. The seat can then be rotatably positionable around the rim of the opening in the top of the outer enclosure.

This provides easy installation and servicing operations, and the installation can determine the relative positions of the seat and the outer enclosure, which forms the base of the toilet.

For this purpose, the opening in the top of the outer enclosure can be circular and the toilet bowl can be circular.

The toilet may further comprise a foot for mounting to a floor, wherein the outer enclosure is mountable on the foot in any angular orientation. This adds extra flexibility to the installation of the toilet. The toilet bowl preferably comprises an upper rim and a lower outlet, wherein the rim and outlet are concentric. This enables the free rotation of the bowl within the outer enclosure.

A duct is preferably provided for providing flush water to an upper part of the toilet bowl. This may for example form part of the seat.

An example of the invention will now be described in detail with reference to the accompanying drawings, in which:
FIG. 1 shows a marine toilet of the invention in cross section; and
FIG. 2 shows the outer appearance of an example of marine toilet of the invention.

The invention provides a marine toilet in which the seat of the toilet is mountable in any angular orientation with respect to the base. This enables independent selection of the base orientation and seat orientation, so that the best use of available space is made possible.

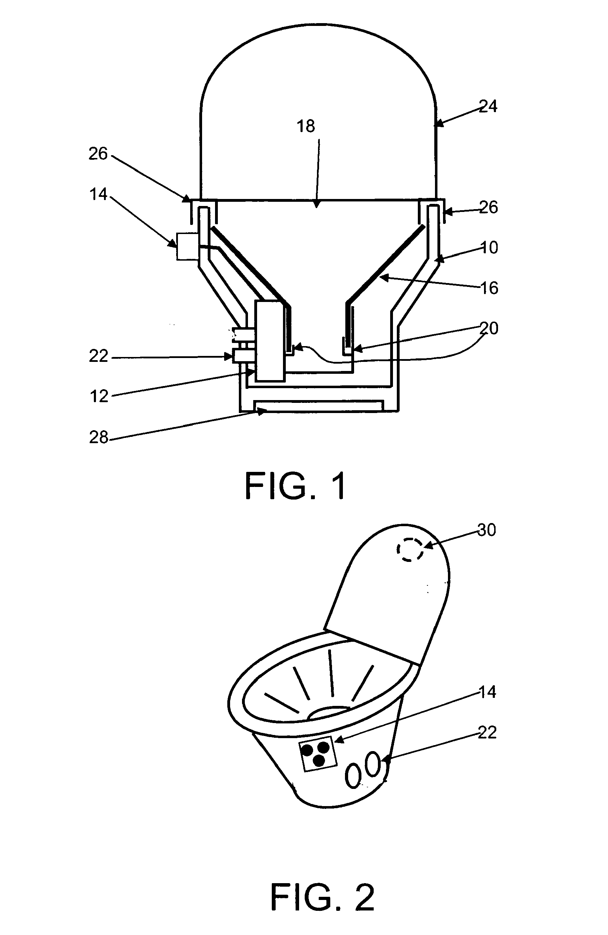

Figure 1 shows an example of marine toilet of the invention in cross section.
Figure 1 shows the toilet having an outer enclosure 10 with an electric pump 12 arranged within the outer enclosure.

An actuator 14 is provided for operating the pump to implement toilet flushing, and this may take the form of a control panel giving various flush options.

A toilet bowl 16 is received in an opening 18 in the top of the outer enclosure 10, and this is designed to seat within the outer enclosure, as shown by supports 20. The bowl 16 is thus installed as a drop fit into the outer enclosure, and this also provides the connection of the bowl outlet (the base of the bowl) to the pump inlet. The pump outlet is shown as 22 for connection to external plumbing.

As will be well known, the pump is also connected to a water inlet to provide the flush function.

A seat 24, comprising a base 26 and a lid, is mounted over the opening 18 in the top of the outer enclosure 10 and can be mounted in any angular orientation with respect to the outer enclosure. In the example shown, the seat 24 is supported by the base 26 which is mounted over the a top rim of the outer enclosure, and can be mounted in any angular orientation.

For this purpose, the top rim is circular, and the base 26 of the seat arrangement has a circular engagement ring 26.

The outer enclosure may also be circular at its base, for example as shown in the example of Figure 2. However, this is not necessary, and the bottom part of the outer enclosure base may be extended in the part housing the pump.

The outer enclosure 10 can be load bearing for supporting the weight of a user of the toilet, and the toilet bowl is not load bearing. This enables the toilet bowl to be designed for light weight, functionality and aesthetics rather than for load bearing reasons. For example, the outer enclosure may be moulded polymer or ceramic and the toilet bowl may be ceramic or stainless steel.

The control panel may be attached to the outer enclosure, as shown, or it may be on a separate mounting, for example a pillar to be mounted near the toilet or for wall mounting. It may be desirable to provide freedom of position of the control panel, as the outer enclosure will be mounted to provide the easiest external plumbing.

If the control panel is to form part of the outer enclosure (so that it does not need to be installed as a separate item) it can, for example be movably attached to the outer enclosure. Alternatively, a number of control panels may be provided, for example three at 120 degree separation so that one will be in a convenient place for the user.

The toilet bowl 16 has an upper rim and a lower exit, and the rim and exit from the toilet bowl are concentric so that the toilet bowl can be mounted in any direction in relation to the outer enclosure. If the pumps and other devices are mounted to the outer enclosure rather than the underside of the bowl, this will also make assembly and disassembly of the toilet easier.

A duct for distributing flush water around the toilet bowl is provided, and this may either form part of the toilet bowl (as is conventional) and be rotatable in relation to the outer enclosure if the bowl is rotatable, or it may be part of a non-liftable seat or it may be independent of the seat and bowl but receivable into the circular rim of the bowl and outer enclosure and so able to be oriented in relation to the axis of the seat.

A foot 28 of the toilet can be attached to the floor of the toilet compartment and onto which the outer enclosure can be mounted, and again the outer enclosure is mountable in any angular orientation with respect to the foot 28.

As mentioned above, the design of marine toilet enables the outer enclosure to be installed in the optimum way having regard to the shape of the outer enclosure, the position of the flush control device, the shape of the space in which the toilet is fitted and the position of any pre-existing fixings or mounting points.

The direction faced by the toilet seat can be selected independently. The flush duct and the bowl may each be able to be rotated independently or together so that the flush water duct distributes flush water around the bowl in the same relationship to the user regardless of the direction in which the toilet outer enclosure faces, enabling the pattern of flush water to be designed to clean the bowl as effectively as possible with as little water usage as possible.

The pump may be electric although a manual pump may also be used.

The toilet can be assembled as a structure of two or more pieces. Thus, in its simplest form, the toilet bowl, flush water distribution duct and seat assembly can be removably slidably received in the opening in the top of the outer enclosure and can be removably engaged with its rim.

The seat, bowl and flush ring can then be rotatably positionable around the rim of the opening in the top of the outer enclosure.

If a separate foot is included, the foot can be fixed in any suitable position to the floor of the toilet compartment, taking account of any pre-existing fixing holes, and the toilet outer enclosure installed in an orientation which makes the connection of water, waste and electric power cable tidy and simple. The seat, flush duct and bowl can then be arranged, either independently or together depending on the final structure of the toilet, in the optimum orientation for the user.

The installed toilet, if electric, requires a system of control, and some possibilities for the control panel are mentioned above. Conventionally these controls are either placed at the foot of the toilet as a foot operated device, on the side of the toilet as a button or lever, or remote from the toilet as a button console, either connected to it by electric wires or wirelessly.

Of these techniques, wireless connection may be the most compact, flexible and least demanding, but is also the most expensive.

A further alternative method of control places the control on the top outermost rim of the lid, as shown in dotted lines 30. This part of the lid is conventionally handled by the user when lifting or lowering the lid. An electric switch can be placed at this point and wires passed through the lid and the lid and seat hinge to the inside of the outer enclosure and the electrical components requiring control.

The wire connecting the lid switch to the electrical devices inside the outer enclosure will either be revealed or pass through cavities formed in the lid, which may be difficult to form and assemble in manufacture and to clean in use. Alternatively, the lid hinge can be designed such that pressing down on the rim of the lifted lid operates an electrical switch positioned inside the outer enclosure, controlling the fill, flush and evacuation sequence of the toilet.

No wires or electrical components external to the outer enclosure will then be necessary, simplifying construction and installation. As the switch is part of the seat assembly, it will always be arranged in the same relationship to the user regardless of the orientation of the outer enclosure, the position of the waste outlet, water inlet or power cable.

This control panel may be on the top surface (for manual actuation with the seat down) or the underside (for manual actuation with the seat up) or they may be operated automatically when the user sits on the seat, as mentioned.

These features provide easy installation and servicing operations, and the installation can determine the relative positions of the seat and the outer enclosure, which forms the base of the toilet.

Various modifications will be apparent to those skilled in the art.

## Claims

1. A marine toilet, comprising:
an outer enclosure (10);
a pump (12) arranged within the outer enclosure (10);
an actuator (14) for operating the pump to implement toilet flushing;
a toilet bowl (16) which is received in an opening (18) in the top of the outer enclosure (10); and
a seat (24) mounted over the opening in the top of the outer enclosure,
**characterised in that** the seat (24) is mountable in any angular orientation during installation with respect to the outer enclosure such that the direction faced by the toilet seat in use can be selected independently of the positioning of the outer enclosure.

2. A marine toilet as claimed in claim 1, wherein the outer enclosure (10) is load bearing for supporting the weight of a user of the toilet, and the toilet bowl (16) is not load bearing.

3. A marine toilet as claimed in claim 1 or 2, wherein the outer enclosure (10) is ceramic.

4. A marine toilet as claimed in any preceding claim, wherein the toilet bowl (16) is ceramic or stainless steel.

5. A marine toilet as claimed in any preceding claim, wherein the pump (12) is electric.

6. A marine toilet as claimed in any preceding claim, wherein the toilet bowl (16) is removably slidably received in the opening (18) in the top of the outer enclosure (10), and the seat is removably engaged with the rim of the opening (18) in the top of the outer enclosure, and is rotatably positionable around the rim of the opening in the top of the outer enclosure.

7. A marine toilet as claimed in any preceding claim, wherein the opening in the top of the outer enclosure (10) is circular.

8. A marine toilet as claimed in any preceding claim, wherein the toilet bowl (16) is circular.

9. A marine toilet as claimed in any preceding claim, further comprising a foot for mounting to a floor, wherein the outer enclosure is mountable on the foot in any angular orientation.

10. A marine toilet as claimed in any preceding claim, wherein the toilet bowl comprises an upper rim and a lower outlet, wherein the rim and outlet are concentric.

11. A marine toilet as claimed in any preceding claim, further comprising a duct for providing flush water to an upper part of the toilet bowl.

12. A marine toilet as claimed in claim 11, wherein the flush duct forms part of the seat.

## Patentansprüche

1. Schiffstoilette, enthaltend:
ein äußeres Gehäuse (10);
eine innerhalb des äußeren Gehäuses (10) angeordnete Pumpe (12);
eine Betätigungseinrichtung (14) zur Bedienung der Pumpe, um einen Spülvorgang der Toilette durchzuführen;
eine Toilettenschüssel (16), die in einer Öffnung (18) in der Oberseite des äußeren Gehäuses (10) aufgenommen ist; und
einen Sitz (24), der über der Öffnung der Oberseite des äußeren Gehäuses montiert ist,
**dadurch gekennzeichnet, dass** der Sitz (24) während des Einbaus in jeder Winkelausrichtung in Bezug auf das äußere Gehäuse 10 montierbar ist, so dass die Richtung, in welcher der Toilettensitz bei der Verwendung weist, unabhängig von der Positionierung des äußeren Gehäuses gewählt werden kann.

2. Schiffstoilette nach Anspruch 1, bei welcher das äußere Gehäuse (10) zum Tragen des Gewichts eines Benutzers der Toilette lasttragend ist und die Toilettenschüssel (16) nicht lasttragend ist.

3. Schiffstoilette nach Anspruch 1 oder 2, bei welcher das äußere Gehäuse (10) Keramik ist.

4. Schiffstoilette nach einem der vorstehenden Ansprüche, bei welcher die Toilettenschüssel (16) Keramik oder rostfreier Stahl ist.

5. Schiffstoilette nach einem der vorstehenden Ansprüche, bei welcher die Pumpe (12) elektrisch ist.

6. Schiffstoilette nach einem der vorstehenden Ansprüche, bei welcher die Toilettenschüssel (16) in der Öffnung (18) in der Oberseite des äußeren Gehäuses (10) abnehmbar verschiebbar aufgenommen ist und der Sitz mit dem Rand der Öffnung (18) in der Oberseite des äußeren Gehäuses abnehmbar in Eingriff steht und um den Rand der Öffnung in der Oberseite des äußeren Gehäuses drehbar positionierbar ist.

7. Schiffstoilette nach einem der vorstehenden Ansprüche, bei welcher die Öffnung in der Oberseite des äußeren Gehäuses (10) kreisförmig ist.

8. Schiffstoilette nach einem der vorstehenden Ansprüche, bei welcher die Toilettenschüssel (16) kreisförmig ist.

9. Schiffstoilette nach einem der vorstehenden Ansprüche, ferner enthaltend einen Fuß nur Montage an einem Boden, wobei das äußere Gehäuse an dem Fuß in jeder Winkelausrichtung montierbar ist.

10. Schiffstoilette nach einem der vorstehenden Ansprüche, bei welcher die Toilettenschüssel einen oberen Rand und einen unteren Auslass enthält, wobei der Rand und der Auslass konzentrisch sind.

11. Schiffstoilette nach einem der vorstehenden Ansprüche, ferner enthaltend eine Leitung zur Zulieferung von Spülwasser zu einem oberen Teil der Toilettenschüssel.

12. Schiffstoilette nach Anspruch 11, bei welcher die Spülleitung einen Teil des Sitzes bildet.

## Revendications

1. Toilette marine, comprenant :
une carrosserie extérieure (10) ;
une pompe (12) agencée dans la carrosserie extérieure (10) ;
un actionneur (14) pour mettre la pompe en fonctionnement et mettre en oeuvre la chasse de la toilette ;
une cuvette de toilette (16) qui est reçue dans une ouverture (18) dans le sommet de la carrosserie extérieure (10) ; et
un siège (24) monté sur l'ouverture dans le sommet de la carrosserie extérieure,
**caractérisé en ce que** le siège (24) peut être monté dans une orientation angulaire quelconque pendant l'installation par rapport à la carrosserie extérieure, de sorte que la direction dans laquelle le siège de toilette fait face en utilisation peut être choisie indépendamment du positionnement de la carrosserie extérieure.

2. Toilette marine selon la revendication 1, dans laquelle la carrosserie extérieure (10) est capable de porter des charges pour supporter le poids d'un utilisateur de la toilette, et la cuve de toilette (16) n'est pas capable de porter des charges.

3. Toilette marine selon la revendication 1 ou 2, dans laquelle la carrosserie extérieure (10) est en céramique.

4. Toilette marine selon l'une quelconque des revendications précédentes, dans laquelle la cuve de toilette (16) est en céramique ou en acier inoxydable.

5. Toilette marine selon l'une quelconque des revendications précédentes, dans laquelle la pompe (12) est électrique.

6. Toilette marine selon l'une quelconque des revendications précédentes, dans laquelle la cuve de toilette (16) est reçue en coulissement de manière amovible dans l'ouverture (18) dans le sommet de la carrosserie extérieure (10), et le siège est engagé de façon amovible avec le rebord de l'ouverture (18) dans le sommet de la carrosserie extérieure, et peut être positionné en rotation autour du rebord de l'ouverture dans le sommet de la carrosserie extérieure.

7. Toilette marine selon l'une quelconque des revendications précédentes, dans laquelle l'ouverture dans le sommet de la carrosserie extérieure (10) est circulaire.

8. Toilette marine selon l'une quelconque des revendications précédentes, dans laquelle la cuve de toilette (16) est circulaire.

9. Toilette marine selon l'une quelconque des revendications précédentes, comprenant en outre un pied pour le montage sur un plancher, dans laquelle la carrosserie extérieure est susceptible d'être montée sur le pied sous une orientation angulaire quelconque.

10. Toilette marine selon l'une quelconque des revendications précédentes, dans laquelle la cuve de toilette comprend un rebord supérieur et une sortie inférieure, ledit rebord et ladite sortie étant concentriques.

11. Toilette marine selon l'une quelconque des revendications précédentes, comprenant en outre un conduit pour fournir l'eau de chasse vers une partie supérieure de la cuve de toilette.

12. Toilette marine selon la revendication 11, dans laquelle le conduit de chasse fait partie du siège.
